# EUROPEAN PATENT SPECIFICATION

(11) **EP 2 410 071 B1**
(45) Date of publication and mention of the grant of the patent: **17.07.2024**
(21) Application number: 10753246.7
(22) Date of filing: 04.03.2010
(51) Int. Cl.: C23C 8/64, H01G 9/055, H01M 4/66, H01G 11/22, H01G 9/048, H01G 11/24, H01G 11/26, H01G 11/28, H01G 11/30, H01G 11/74, H01G 11/86, H01G 9/045

(54) **ALUMINUM MEMBER COVERED WITH CONDUCTIVE COAT AND PROCESS FOR PRODUCTION OF SAME**
MIT EINER LEITFÄHIGEN BESCHICHTUNG BEDECKTES ALUMINIUMELEMENT UND VERFAHREN ZU SEINER HERSTELLUNG
ELÉMENT EN ALUMINIUM RECOUVERT D'UN REVÊTEMENT CONDUCTEUR ET PROCÉDÉ DE PRODUCTION ASSOCIÉ

(30) Priority: 17.03.2009 JP 2009064187
(43) Date of publication of application: 25.01.2012
(73) Proprietor: Toyo Aluminium Kabushiki Kaisha, Osaka-shi, Osaka 541-0056 (JP)
(72) Inventor: INOUE, Hidetoshi, Osaka-shi, Osaka 541-0056 (JP); NAKAYAMA, Kunihiko, Osaka-shi, Osaka 541-0056 (JP); ASHITAKA, Zenya, Osaka-shi, Osaka 541-0056 (JP)
(74) Representative: Grünecker Patent- und Rechtsanwälte PartG mbB
(86) International application number: PCT/JP2010/001490
(87) International publication number: WO 2010/106749

(56) References cited:
- EP-A1- 1 609 878
- EP-A1- 1 796 116
- EP-A1- 1 798 743
- WO-A1-2008/142913
- JP-A- 2005 022 270
- JP-A- 2006 503 179
- JP-A- 2008 283 152
- JP-A- H02 137 310
- JP-A- H03 109 714
- JP-A- H03 179 717
- DIAZ J ET AL: "Raman spectroscopy of carbon films grown by pulsed laser evaporation of graphite", DIAMOND AND RELATED MATERIALS, ELSEVIER SCIENCE PUBLISHERS, AMSTERDAM, NL, vol. 1, no. 7, 1 May 1992 (1992-05-01), pages 824 - 827, XP024178481, ISSN: 0925-9635, [retrieved on 19920501], DOI: 10.1016/0925-9635(92)90108-Z

## Description

### TECHNICAL FIELD

The present invention relates generally to an electrically conductive substance coated aluminum material in which a surface of an aluminum material is coated with an electrically conductive substance and to a method for manufacturing the same. More particularly, the present invention relates to an electrically conductive substance coated aluminum material used for current collectors and electrodes of a variety of capacitors, current collectors and electrodes of a variety of batteries, and the like and a method for manufacturing the same.

### BACKGROUND ART

Conventionally, when an aluminum material is used as a material for a current collector and an electrode as it is, an oxide film formed on a surface of the aluminum material is passivated and as a result, electrical conductivity of the surface is reduced, thereby causing a problem of insulation. To solve this problem, there has been adopted a technique in which carbon as an electrically conductive substance is applied onto the surface of the aluminum material and the electrical conductivity of the surface is improved.

For example, as disclosed in Japanese Patent Application Laid-Open Publication No. 2000-164466 (hereinafter, referred to as Patent Document 1), there is a method in which a carbon film is formed on the surface of the aluminum material by employing a vacuum deposition method. Specifically, Patent Document 1 describes, as a method for manufacturing an electrode used for a capacitor or a battery, that a current collector formed of aluminum is provided with an intermediate film of carbon and an active material layer composed of a pasty mixed material obtained by mixing activated carbon, carbon black, and methylcellulose as a binder is applied, as an electrically conductive substance, on the surface thereof.
JP2008283152A, EP1609878A1, WO2008/142913A1, EP1798743A1, EP1796116A1, JP2005022270A and XP024178481 also relate to methods for manufacturing an electrically conductive substance coated aluminum material.

### CITATION LIST

### PATENT LITERATURE

Patent Document 1: Japanese Patent Application Laid-Open Publication No. 2000-164466

### SUMMARY OF THE INVENTION

### TECHNICAL PROBLEM

However, since the composite material obtained by employing the above-mentioned method has the structure in which carbon particles themselves as an electrically conductive substance are carried on the surface of the aluminum material as a base material, when the composite material is exposed to an atmosphere having a high temperature and a high humidity for a long period of time, moisture contained in the atmosphere intrudes into interstices among the carbon particles, thereby causing hydration reaction in an interface between the carbon particles and the aluminum material. Further, in a case where this composite material is used for a capacitor or a battery, it is often the case that a corrosive component contained in the capacitor or the battery accelerates the progress of the above-mentioned hydration reaction.

For example, in the current collector or electrode, disclosed in Patent Document 1, having the surface on which the carbon particles are carried by employing the vacuum deposition method, due to an influence of a hydroxide formed by the above-mentioned hydration reaction, a part of the carbon particles as the electrically conductive substance is separated off from the surface of the aluminum material, thereby reducing electrical conductivity.

In addition, in Patent Document 1, although the carbon particles as the electrically conductive substance are fixedly attached by using the binder, an extended period of use causes not only properties of the binder itself to be deteriorated but also the above-mentioned hydration reaction to be induced, thereby resulting in the reduction in the electrical conductivity.

Therefore, objects of the present invention are to provide an electrically conductive substance coated aluminum material which allows an electrically conductive substance ensuring electrical conductivity of a surface not to be exfoliated from an aluminum material and can be favorably used as a material for a current collector and an electrode; and a method for manufacturing the above-mentioned electrically conductive substance coated aluminum material.

### SOLUTION TO PROBLEM

The present inventors have devoted themselves to studies. As a result, the following findings have been obtained. The present inventors thought that the above-mentioned hydration reaction could be suppressed by forming an electrically conductive substance containing layer so as to contain a substance exhibiting electrical conductivity without carbon particles to form the electrically conductive substance containing layer on a surface of an aluminum material. In other words, the present inventors have reached the idea that the electrically conductive substance containing layer can be formed, by forming an organic substance layer as the electrically conductive substance containing layer on the surface of the aluminum material, so as to include in this organic substance layer a carbon precursor as the substance exhibiting the electrical conductivity.

Specifically, without using the carbon particles as in the conventional one, first, a resin layer is formed on the surface of the aluminum material. Thereafter, the aluminum material having the resin layer formed on the surface thereof is heated in a space including a hydrocarbon-containing substance, whereby the resin layer formed on the surface of the aluminum material remains as an organic substance layer after the heating step. This organic substance layer has an extremely dense structure. Due to this dense structure, in a case where the organic substance coated aluminum material is exposed to an atmosphere having a high temperature and a high humidity for a long period of time, intrusion of moisture contained in the atmosphere can be suppressed. In addition, since this organic substance layer includes the carbon precursor, the presence of this carbon precursor allows the electrical conductivity to be ensured even without causing the surface of the aluminum material to carry the carbon particles. As a result, the prevent inventors obtained the finding that it is made possible to ensure the electrical conductivity while the hydration reaction with the moisture in the atmosphere having the high humidity is suppressed, as compared with the conventional carbon coated aluminum material. Based on the above-mentioned findings obtained by the present inventors, the present invention was made.

In particular, the present invention discloses method for manufacturing an electrically conductive substance coated aluminum material defined in claim 1. Preferred embodiments are defined in claims 2 and 3. Further, the present invention discloses an electrically conductive substance coated aluminum material, obtainable by a method in accordance with any of claims 1 to 3, as defined in claim 4.1

An electrically conductive substance coated aluminum material according to the present invention comprises: an aluminum material; an organic substance layer formed on a surface of the aluminum material; and an interposing layer formed in at least one part of regions of the surface of the aluminum material between the aluminum material and the organic substance layer and including a carbide of aluminum, and the organic substance layer includes a carbon precursor as an electrically conductive substance.

In the electrically conductive substance coated aluminum material according to the present invention, first, the interposing layer formed between the aluminum material and the organic substance layer and including the carbide of the aluminum acts to enhance adhesiveness between the surface of the aluminum material and the organic substance layer formed on the surface of the aluminum material. In addition, since the organic substance layer has the extremely dense structure, the hydration reaction with the moisture in the atmosphere having the high humidity can be suppressed. Furthermore, due to the presence of the carbon precursor in the organic substance layer, the electrical conductivity can be ensured even without causing the surface of the aluminum material to carry the carbon particles.

In the electrically conductive substance coated aluminum material according to the present invention, it is preferable that the carbon precursor included in the organic substance layer includes at least elements of carbon and hydrogen and that the carbon precursor includes a component similar to graphite or a component similar to amorphous carbon. In other words, in the electrically conductive substance coated aluminum material according to the present invention, it is preferable that the carbon precursor included in the organic substance layer includes at least the elements of the carbon and the hydrogen, and in a Raman spectrum detected by employing a Raman spectroscopy, a Raman shift has a peak of a Raman scattering intensity in the vicinity of 1350 cm⁻¹ or in the vicinity of 1580 cm⁻¹.

The carbon precursor as described above is included in the organic substance layer, thereby allowing the organic substance layer exhibiting the electrical conductivity to be formed.

In addition, in the electrically conductive substance coated aluminum material according to the present invention, it is preferable that the organic substance layer is formed of a substance which is not volatilized by heating conducted at a temperature in a range of greater than or equal to 450°C and less than 660°C for a period of time in a range of greater than or equal to 1 hour and less than or equal to 100 hours.

The organic substance layer is formed of the above-mentioned substance, thereby allowing a structure having few defects and cracks to be formed.

Furthermore, it is preferable that the electrically conductive substance coated aluminum material, according to the present invention, having any of the above-mentioned features is used to form electrode structures.

It is preferable that the above-mentioned electrode structures are used to form a current collector and an electrode of a capacitor. This allows capacitance characteristics, internal resistance characteristics, charge and discharge characteristics, and life of a capacitor to be enhanced. As an example of a capacitor, an electric double layer capacitor, an aluminum electrolytic capacitor, a functional solid capacitor, or the like is cited.

In addition, it is preferable that the above-mentioned electrode structures are used to form a current collector and an electrode of a battery. This allows capacitance characteristics, internal resistance characteristics, charge and discharge characteristics, and life of a battery to be enhanced. As an example of a battery, a secondary battery such as a lithium ion battery is cited.

A method, according to the present invention, for manufacturing an electrically conductive substance coated aluminum material comprises the below-described steps.
(A) A resin layer formation step of forming a resin layer on a surface of an aluminum material.
(B) An organic substance layer formation step of forming an organic substance layer including a carbon precursor by placing the aluminum material having the resin layer formed thereon in a space including a hydrocarbon-containing substance and heating the aluminum material.

In the manufacturing method according to the present invention, it is not required to provide an intermediate film of carbon for ensuring adhesiveness as described in Patent Document 1 and it is also not necessarily required to conduct a series of processes of drying and pressure bonding after the application. After forming the resin layer on the surface of the aluminum material, the simple step in which the aluminum material is placed in the space including the hydrocarbon-containing substance and is heated is conducted, thereby allowing not only the surface of the aluminum material to be coated with the organic substance layer including a carbon precursor but also the interposing layers including the carbide of the aluminum to be formed between the aluminum material and the organic substance layer. This allows adhesiveness between the aluminum material and the organic substance layer to be enhanced.

In addition, in the manufacturing method according to the present invention, the resin layer is formed on the surface of the aluminum material and thereafter, the aluminum material and the resin layer are placed in the space including the hydrocarbon-containing substance, thereby forming the organic substance layer on the surface of the aluminum material. In the organic substance layer formation step, although the resin layer is heated in the atmosphere including the hydrocarbon-containing substance, the resin layer is neither completely oxidized nor vanished and becomes the organic substance layer including the carbon precursor. This causes the organic substance layer exhibiting the electrical conductivity to be present on the surface of the aluminum material.

Since the organic substance layer formed on the surface of the aluminum material has the extremely dense structure, the hydration reaction with the moisture in the atmosphere having the high humidity can be suppressed. Furthermore, due to the presence of the carbon precursor in the organic substance layer, the electrical conductivity can be ensured even without causing the surface of the aluminum material to carry the carbon particles.

In the method, according to the present invention, for manufacturing the electrically conductive substance coated aluminum material, it is preferable that the resin layer formation step includes a step of mixing a resin and a solvent.

This mixing step is included, thereby allowing the resin layer to be evenly formed on the surface of the aluminum material and allowing the organic substance layer formed in the subsequent step to be evenly formed on the surface of the aluminum material. This allows the organic substance layer having the dense structure to be evenly formed on the surface of the aluminum material and allows the hydration reaction with the moisture in the atmosphere having the high humidity to be prevented in any part of the surface of the aluminum material.

Furthermore, in the method, according to the present invention, for manufacturing the electrically conductive substance coated aluminum material, it is preferable that the organic substance layer formation step is conducted at a temperature in a range of greater than or equal to 450°C and less than 660°C.

### ADVANTAGEOUS EFFECTS OF THE INVENTION

As described above, according to the present invention, since an organic substance layer is provided on a surface of an aluminum material, in a case where an organic substance coated aluminum material is exposed to an atmosphere having a high temperature and a high humidity for a long period of time, intrusion of moisture contained in the atmosphere can be suppressed. In addition, since this organic substance layer includes a carbon precursor, the presence of this carbon precursor allows electrical conductivity to be ensured even without causing the surface of the aluminum material to carry carbon particles. As a result, as compared with the conventional electrically conductive substance coated aluminum material, while hydration reaction with the moisture in the atmosphere having the high humidity is suppressed, the electrical conductivity can be ensured, and it is made possible that the electrically conductive substance coated aluminum material according to the present invention can be used in a harsh atmosphere having a high temperature and a high humidity for a longer period of time than the conventional one.

### BRIEF DESCRIPTION OF THE DRAWINGS

Fig. 1 is a cross-sectional view schematically illustrating a detailed cross-sectional structure of an electrically conductive substance coated aluminum material as one embodiment of the present invention.
Fig. 2 shows a photograph obtained through observing a cross section of a sample in example 4 according to the present invention by using a scanning electron microscope (SEM).
Fig. 3 shows photographs obtained through dissolving an aluminum part by using a bromine-methanol-mixed solution to observe interposing layers of the sample in example 4 according to the present invention and through directly observing surfaces of the remaining interposing layers by using the SEM.
Fig. 4 shows a Raman spectrum detected by employing a Raman spectroscopy with respect to an organic substance layer of the sample in example 4 according to the present invention.

### DESCRIPTION OF EMBODIMENTS

Hereinafter, an embodiment of the present invention will be described with reference to the accompanying drawings.

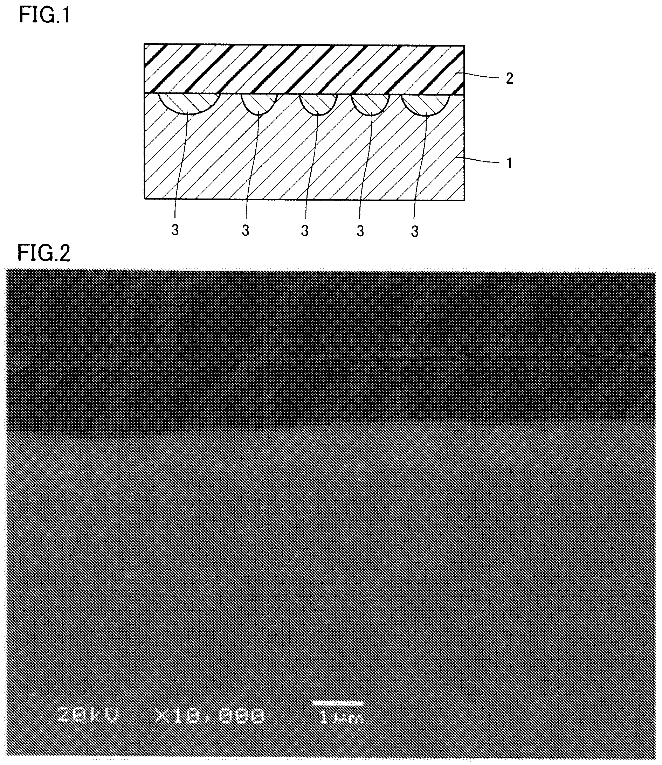

As shown in Fig. 1, in a cross sectional structure of an electrically conductive substance coated aluminum material as one embodiment of the present invention, on a surface of aluminum foil 1 as one example of an aluminum material, an organic substance layer 2 is formed. Between the aluminum foil 1 and the organic substance layer 2, interposing layers 3 including an aluminum element and a carbon element are formed. The interposing layers 3 are formed in at least one part of regions of the surface of the aluminum foil 1 and includes a carbide of aluminum, for example, Al₄C₃. The organic substance layer 2 includes a carbon precursor. Some parts of the organic substance layer 2 are directly adherent to the aluminum foil 1 and others thereof are adherent to the aluminum foil 1 via the interposing layers 3. The organic substance layer 2 is directly adherent to the aluminum foil 1, thereby having sufficient adhesiveness, but the interposing layers 3 are present, thereby causing the organic substance layer 2 to be further firmly adherent to the aluminum foil 1.

As shown in Fig. 1, in the one embodiment, at least one part of the organic substance layer 2 is attached onto one part of the regions of the interposing layers 3. One part of the organic substance layer 2, formed on the surface of the aluminum foil 1, may be attached onto surfaces of the one part of the regions of the interposing layers 3, and the other part of the organic substance layer 2 may be attached onto a surface of the aluminum foil 1 where the interposing layers 3 are not formed, instead of the surfaces of the interposing layers 3. Although the plurality of interposing layers 3 are formed on the surface of the aluminum foil 1 so as to be spaced from one another in an island-like manner as shown in Fig. 1, the plurality of interposing layers 3 may be formed so as to be adjacent to one another in the island-like manner.

In the electrically conductive substance coated aluminum material according to the present invention shown in Fig. 1, first, the interposing layers 3 formed between the aluminum foil 1 and the organic substance layer 2 and including the carbide of the aluminum act to enhance adhesiveness between the surface of the aluminum foil 1 and the organic substance layer 2 formed on the surface of the aluminum foil 1. As a result of this action, even under a high humidity condition, intrusion of moisture into a space between the aluminum foil 1 and the organic substance layer 2 can be suppressed.

It is preferable that the carbon precursor included in the organic substance layer 2 formed on the surface of the aluminum foil 1 includes at least elements of carbon and hydrogen and that the carbon precursor includes a component similar to graphite or a component similar to amorphous carbon. It is inferred that a resin layer formed on the surface of the aluminum foil 1 is changed to the carbon precursor by the later-described heating step.

In the electrically conductive substance coated aluminum material according to the present invention which has the above-mentioned structure, it is preferable that a period of time lasting until the organic substance layer 2 is completely exfoliated from the aluminum foil 1 in the below-specified hydrochloric acid exfoliation test is long.

### <Hydrochloric acid exfoliation test>

A strip-shaped electrically conductive substance coated aluminum material having a width of 10 mm and a length of 100 mm is immersed in a hydrochloric acid solution of 1M (M means a molar concentration [mol/liter]) having a temperature of 80°C and a period of time lasting until the organic substance layer is completely exfoliated from the aluminum material is measured.

When this period of time is long, it is made possible that the organic substance layer serving as an electric conductor is kept to be stably adherent to the aluminum material for en extended period of time.

In the one embodiment of the present invention, the aluminum material (aluminum foil 1 as the one example in the above-described embodiment) as a base material on which the organic substance layer 2 is formed is not particularly limited, and pure aluminum or an aluminum alloy can be used. It is preferable that such an aluminum material has an aluminum purity of 98% by mass or more as a value measured in accordance with a method described in "JIS H2111". As the aluminum material used in the present invention, included is an aluminum alloy having composition into which at least one kind of an alloy element selected from the group consisting of lead (Pb), silicon (Si), iron (Fe), copper (Cu), manganese (Mn), magnesium (Mg), chromium (Cr), zinc (Zn), titanium (Ti), vanadium (V), gallium (Ga), nickel (Ni) and boron (B) is added so as to have a content being within a necessary range; or also aluminum having composition in which a content of the above-mentioned unavoidable impurity element is limited. Although a thickness of the aluminum material is not particularly limited, when the aluminum material is foil, it is preferable that a thickness thereof is within a range of greater than or equal to 5 µm and less than or equal to 200 µm, and when the aluminum material is a plate, it is preferable that a thickness thereof is within a range exceeding 200 µm and less than or equal to 3 mm.

As the above-described aluminum material, an aluminum material manufactured by employing the heretofore known method can be used. For example, molten aluminum or a molten aluminum alloy, which has the above-mentioned predetermined composition, is prepared and an ingot obtained by casting the molten aluminum or the molten aluminum alloy is appropriately subjected to a homogenization process. Thereafter, this ingot is subjected to hot rolling and cold rolling, thereby allowing the aluminum material to be obtained. Midway in the above-mentioned cold rolling process, an intermediate annealing process at a temperature which is within a range of greater than or equal to 150°C and less than or equal to 400°C may be conducted.

It is preferable that the electrically conductive substance coated aluminum material according to the present invention having any of the above-described features is used to form electrode structures.

It is preferable that the above-mentioned electrode structures are used to form a current collector and an electrode of a capacitor. This allows capacitance characteristics, internal resistance characteristics, charge and discharge characteristics, and life of a capacitor to be enhanced. As an example of a capacitor, an electric double layer capacitor, an aluminum electrolytic capacitor, a functional solid capacitor, or the like is cited.

In addition, it is preferable that the above-mentioned electrode structures are used to form a current collector and an electrode of a battery. This allows capacitance characteristics, internal resistance characteristics, charge and discharge characteristics, and life of a battery to be enhanced. As an example of a battery, a secondary battery such as a lithium ion battery is cited.

In one embodiment of a method, according to the present invention, for manufacturing the electrically conductive substance coated aluminum material, first, a resin layer is formed on a surface of the aluminum foil 1 (resin layer formation step). Next, the aluminum foil 1 having the resin layer formed thereon is placed in a space including a hydrocarbon-containing substance and is heated, thereby forming an organic substance layer including the carbon precursor (organic substance layer formation step). By conducting this organic substance layer formation step, as shown in Fig. 1, the organic substance layer 2 is formed on the surface of the aluminum foil 1.

In the manufacturing method according to the present invention, it is not required to provide an intermediate film of carbon for ensuring adhesiveness as described in Patent Document 1 and it is also not necessarily required to conduct a series of processes of drying and pressure bonding after the application. After forming the resin layer on the surface of the aluminum foil 1, the simple step in which the aluminum foil 1 is placed in the space including the hydrocarbon-containing substance and is heated is conducted, thereby allowing not only the surface of the aluminum foil 1 to be coated with the organic substance layer 2 but also the interposing layers 3 including the carbide of the aluminum to be formed between the aluminum foil 1 and the organic substance layer 2. This allows adhesiveness between the aluminum foil 1 and the organic substance layer 2 including the carbon precursor to be enhanced as shown in Fig. 1.

In addition, in the manufacturing method according to the present invention, the resin layer is formed on the surface of the aluminum foil 1 in the resin layer formation step and thereafter, the aluminum foil 1 and the resin layer are placed in the space including the hydrocarbon-containing substance in the organic substance layer formation step, thereby forming the organic substance layer 2 on the surface of the aluminum foil 1 as shown in Fig. 1. In the organic substance layer formation step, although the resin layer is heated in the atmosphere including the hydrocarbon-containing substance, the resin layer is neither completely oxidized nor vanished and becomes the organic substance layer 2 including the carbon precursor. This provides the organic substance layer 2 with electrical conductivity.

In addition, since the organic substance layer 2 has an extremely dense structure, the organic substance layer 2 is present on the surface of the aluminum foil 1, thereby allowing hydration reaction with moisture in an atmosphere having a high humidity to be suppressed. This allows the electrically conductive substance coated aluminum material to be used in a harsh atmosphere having a high temperature and a high humidity for a longer period of time than the conventional one.

In the method, according to the present invention, for manufacturing the electrically conductive substance coated aluminum material, it is preferable that the resin layer formation step includes a step (mixing step) of mixing a resin and a solvent.

This mixing step is included, thereby allowing the resin layer to be evenly formed on the surface of the aluminum foil 1 and allowing the organic substance layer 2 formed in the subsequent step to be evenly formed on the surface of the aluminum foil 1. This allows the organic substance layer 2 having the dense structure to be evenly formed on the surface of the aluminum foil 1 and allows the hydration reaction with the moisture in the atmosphere having the high humidity to be suppressed even in any part of the surface of the aluminum foil 1.

A mixing method and a mixing time are not particularly limited and it is only required for the mixing method and the mixing time to allow even formation of the resin layer. It is preferable that an amount of an added solvent is less than or equal to 50% by mass with respect to an amount of an added resin.

The resin used in the resin layer formation step is not particularly limited. However, for example, cited are a resin (for example, a phenol based resin), having a ring structure, such as a polyvinyl alcohol based resin, a polyvinyl butyral based resin, an epoxy based resin, an epoxy based resin, and an aromatic resin; and a resin such as an acryl based resin, and in particular, the phenol based resin is preferable. In addition, in terms of characteristics of the resin, it is preferable to use a resin which is not volatilized by heating conducted in the hydrocarbon atmosphere at a temperature in a range of greater than or equal to 450°C and less than 660°C for a period of time in a range of greater than or equal to 1 hour and less than or equal to 100 hours. This is because if the organic substance layer is volatilized during the organic substance layer formation step, a defect or a crack is caused in the organic substance layer 2 and the interposing layers 3 are easily formed in missing parts in the organic substance layer 2, and as a result, the effect to suppress the hydration reaction cannot be obtained.

Although the solvent appropriately used in the resin layer formation step is not particularly limited, a good solvent of a resin (solvent in which the resin is soluble) is preferable. For example, in a case where as the resin, an oil soluble resin is used, methyl isobutyl ketone, toluene, methyl ethyl ketone, or the like is cited.

In the above-described resin layer formation step, as a method of forming the resin layer on the surface of the aluminum foil 1, employed is a method in which a slurry-state or a liquid-state preparation is made by appropriately using the resin and the solvent and is attached onto the surface of the aluminum foil 1 through applying, dipping, or the like, or a method in which a solid-state preparation is made and is attached in the form of powder onto the surface of the aluminum foil 1 through spraying, extrusion, thermocompression bonding, or the like. After attaching the above-mentioned resin layer onto the surface of the aluminum foil 1 and before the heating process, drying at a temperature in a range of greater than or equal to 20°C and less than or equal to 300°C may be conducted.

In addition, in the electrically conductive substance coated aluminum material according to the present invention, it is only required to form the organic substance layer 2 on at least one surface of the aluminum foil 1 and it is preferable that a thickness thereof is within a range of greater than or equal to 0.01 µm and less than or equal to 10 mm. Although the organic substance layer may be formed on the whole surface of the aluminum material, one part on which no organic substance layer is formed may be provided on one part of the surface of the aluminum material in accordance with use application which is intended to be finally obtained (for example, in a case where one part on which no organic substance layer is formed is desired to be provided on an end portion of the aluminum material in order to allow connection with a terminal).

In the one embodiment of the method, according to the present invention, for manufacturing the electrically conductive substance coated aluminum material, a kind of the hydrocarbon-containing substance to be used is not particularly limited. As the kind of the hydrocarbon-containing substance, for example, a paraffin based hydrocarbon such as methane, ethane, propane, n-butane, isobutene, and pentane; an olefin based hydrocarbon such as ethylene, propylene, butene, and butadiene; an acetylene based hydrocarbon such as acetylene; or a derivative of each of these hydrocarbons is cited. Among these hydrocarbons, the paraffin based hydrocarbon such as the methane, the ethane, and the propane is preferable because the paraffin based hydrocarbon becomes gaseous in the process of heating the aluminum material. Further preferable is any one kind of the hydrocarbons of the methane, the ethane, and the propane. The most preferable hydrocarbon is the methane.

In addition, in the manufacturing method according to the present invention, the hydrocarbon-containing substance may be used in any state of a liquid state, a gaseous state, and the like. It is only required for the hydrocarbon-containing substance to be present in a space in which the aluminum material is present, and the hydrocarbon-containing substance may be introduced by employing any method in the space in which the aluminum material is present. For example, in a case where the hydrocarbon-containing substance is in the gaseous state (the methane, the ethane, the propane, etc.), an enclosed space in which the process of heating the aluminum material is conducted may be filled with the hydrocarbon-containing substance alone or in combination with an inert gas. In addition, in a case where the hydrocarbon-containing substance is in the liquid state, the enclosed space may be filled with the hydrocarbon-containing substance alone or in combination with the inert gas so as to allow the hydrocarbon-containing substance to be gasified.

In the process of heating the aluminum material, a pressure of a heating atmosphere is not particularly limited, and the process thereof may be conducted under an ordinary pressure, a reduced pressure, or an increased pressure. In addition, adjustment of the pressure may be conducted at any time such as time when a certain heating temperature is being retained, time when a temperature is being increased to reach a certain heating temperature, or time when a temperature is being decreased from a certain heating temperature.

A mass ratio of the hydrocarbon-containing substance introduced into the space in which the aluminum material is heated is not particularly limited. Ordinarily, it is preferable that the mass ratio is within a range of greater than or equal to 0.1 part by mass and less than or equal to 50 parts by mass as a value in terms of carbon with respect to 100 parts by mass of the aluminum and it is particularly preferable that the mass ratio is within a range of greater than or equal to 0.5 part by mass and less than or equal to 30 parts by mass as a value in terms of carbon.

In the process of heating the aluminum material, a heating temperature may be appropriately set in accordance with composition or the like of the aluminum material to be heated. Ordinarily, it is preferable that the heating temperature is within a range of greater than or equal to 450°C and less than 660°C and it is more preferable that the heating temperature is within a range of greater than or equal to 530°C and less than or equal to 620°C. Here, in the manufacturing method according to the present invention, heating the aluminum material at a temperature less than 450°C is not excluded, and the aluminum material may be heated at least at a temperature exceeding 300°C.

Although a heating time depends on a heating temperature or the like, the heating time is within a range of greater than or equal to 1 hour and less than or equal to 100 hours in general.

In a case where a heating temperature is greater than or equal to 400°C, it is preferable that an oxygen concentration in the heating atmosphere is less than or equal to 1.0% by volume. If a heating temperature is greater than or equal to 400°C and an oxygen concentration in the heating atmosphere exceeds 1.0% by volume, it is likely that the thermally oxidized film on the surface of the aluminum material is overgrown and a surface resistance value of the aluminum material is boosted.

In addition, before the heating process, the surface of the aluminum material may be roughened. A roughening method is not particularly limited and the heretofore known technique such as cleaning, etching, and blast can be used.

### EXAMPLES

In accordance with the below-described examples 1 through 5 and comparison examples 1 and 2, electrically conductive substance coated aluminum materials, in each of which an aluminum foil 1 was used as a base material, were prepared.

### (Examples 1 through 5)

Four parts by mass of each solvent shown in "Solvent" in Table 1 was added to one part by mass of each resin shown in "Resin used in resin layer formation step" and was mixed to be dissolved, thereby obtaining each coating solution having a solid content of 20% by mass. A mixture ratio of toluene and methyl ethyl ketone of a mixture solvent, which was a "Solvent" in each of the examples 2 through 5, was 1:1.

Each of these coating solutions was applied onto both surfaces of aluminum foil having a thickness of 50 µm and a purity of 99.3% by mass, thereby forming each resin layer, and drying was conducted at a temperature of 150°C for 30 seconds (resin layer formation step). A thickness of one surface of the resin layer obtained after the drying was 1 through 3 µm. Thereafter, the aluminum foil whose both surfaces had the resin layers formed thereon was retained in a methane gas atmosphere at a temperature of 550°C for 10 hours, thereby forming an organic substance layer (organic substance layer formation step). As described above, electrically conductive substance coated aluminum materials according to the present invention were prepared.

When a cross section of each of the obtained electrically conductive substance coated aluminum materials, according to the present invention, in examples 1 through 5 was observed, it was able to be confirmed that an organic substance layer 2 was formed on a surface of the aluminum foil 1.

The observation of the cross section was conducted by using a scanning electron microscope (SEM).

As one example, a photograph obtained through observing a cross section of a sample of the electrically conductive substance coated aluminum material in example 4 by using the scanning electron microscope (SEM) is shown in Fig. 2. A magnification of the photograph was 10000 times.

As shown in Fig. 2, a state in which in the electrically conductive substance coated aluminum material, the organic substance layer (a portion being relatively dark in color) has an extremely dense structure can be seen well.

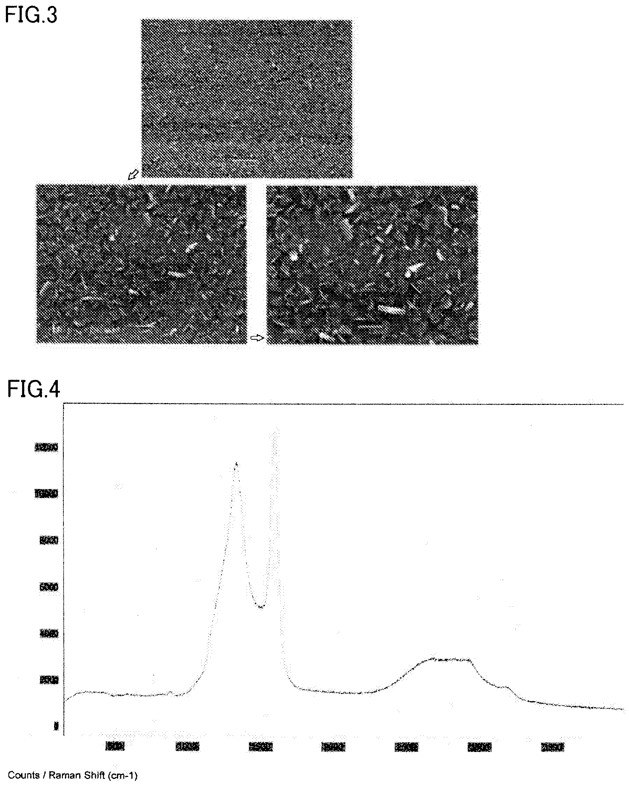

In addition, in order to observe interposing layers 3 of the electrically conductive substance coated aluminum material in example 4, an aluminum part was dissolved by using a bromine-methanol-mixed solution, and photographs obtained by directly observing surfaces of the remaining interposing layers 3 by using the SEM are shown in Fig. 3. In other words, Fig. 3 shows the photographs each obtained by observing back sides of the surfaces of the interposing layers 3 which had the aluminum foil 1 removed therefrom and were exposed, the back sides viewed from the interposing layers 3 toward the organic substance layer 2 in Fig. 1. In Fig. 3, magnifications of the photographs were 3000 times, 10000 times, and 15000 times in the order indicated by arrows.

As shown in Fig. 3, a state in which in the electrically conductive substance coated aluminum material, a multitude of interposing layers have been dispersively formed in an island-like manner on at least one part of regions of the surface of the aluminum foil can be seen well.

In addition, when with respect to the electrically conductive substance coated aluminum material in example 4, components included in the organic substance layer were checked in a Raman spectrum detected by employing a Raman spectroscopy (a measuring apparatus name: Ramascope 1000, a microscopic Raman system produced by Renishaw plc), a peak of a Raman scattering intensity corresponding to amorphous carbon in a Raman shift was detected in the vicinity of 1350 cm⁻¹ and further, a peak of a Raman scattering intensity corresponding to graphite in the Raman shift was detected in the vicinity of 1580cm⁻¹. The Raman spectrum is shown in Fig. 4.

As shown in Fig. 4, considering that the peaks of the Raman scattering intensities, which were thought to be those of an amorphous carbon component and a graphite component, were detected, it is inferred that in the electrically conductive substance coated aluminum material according to the present invention, a carbon precursor is present in the organic substance layer.

### (Comparison example 1)

One part by mass of carbon black particles having an average particle diameter of 20 nm was dispersed in butanol shown in "Solvent" in Table 1, thereby obtaining a coating solution, as a coating solution having a solid content of 20% by mass, which included carbon black particles having a solid content of 20% by mass. This coating solution was applied onto both surfaces of aluminum foil having a thickness of 50 µm and a purity of 99.3% by mass, and drying was conducted at a temperature of 150°C for 30 seconds (a process corresponding to the resin layer formation step). A thickness of one surface of the carbon-black-particle-containing layer, obtained after the drying, was 1 µm. Thereafter, the aluminum foil whose both surfaces had the carbon-black-particle-containing layers formed thereon was retained in a methane gas atmosphere at a temperature of 550°C for 10 hours, thereby forming carbon-containing layers (a process corresponding to the organic substance layer formation step). As described above, the electrically conductive substance coated aluminum material as comparison example 1 was prepared. The manufacturing method in the present comparison example corresponds to a method in which instead of the resin layer formation step conducted in the manufacturing method according to the present invention, the process of forming the carbon-black-particle-containing layers through dispersing the carbon black particles in the solvent is conducted.

### (Comparison example 2)

Two parts by mass of carbon black particles having an average particle diameter of 20 nm were mixed with one part by mass of polyvinyl chloride based resin (which acts as a binder for the carbon black particles in this case) shown in "Resin used in resin layer formation step" in Table 1 and the resultant was dispersed in a mixture solvent (mixture ratio of 1:1) of toluene and methyl ethyl ketone, shown in "Solvent" in Table 1, thereby obtaining a coating solution, as a coating solution used in the process corresponding to the resin layer formation step, which included the carbon black particles having a solid content of 20% by mass. This coating solution was applied onto both surfaces of aluminum foil having a thickness of 50 µm and a purity of 99.3% by mass, and drying was conducted at a temperature of 150°C for 30 second (a process corresponding to the resin layer formation step). A thickness of one surface of the carbon-black-particle-containing layer, obtained after the drying, was 1 µm. Thereafter, the aluminum foil whose both surfaces had the carbon-black-particle-containing layers formed thereon was retained in a methane gas atmosphere at a temperature of 550°C for 10 hours, thereby forming carbon-containing layers (a process corresponding to the organic substance layer formation step). As described above, the electrically conductive substance coated aluminum material as comparison example 2 was prepared. The manufacturing method in the present comparison example corresponds to a method in which instead of the resin layer formation step conducted in the manufacturing method according to the present invention, the process of forming the carbon-black-particle-containing layers through dispersing the carbon black particles and the binder in the solvent is conducted.

### [Evaluation]

With respect to each of the organic substance layers 2 (the carbon-containing layers in comparison examples 1 and 2) in each of the electrically conductive substance coated aluminum materials obtained in examples 1 through 5 and comparison examples 1 and 2, an electrical conductivity test was conducted. With respect to each of the electrically conductive substance coated aluminum materials obtained in examples 1 and comparison examples 1 and 2, an over-time reliability test (hydrochloric acid exfoliation test and hydration reaction test) was conducted. The results of these tests are shown in Table 1. The evaluation conditions are as described below.

### [Electrical conductivity test]

Electrical conductivity of each of the electrically conductive substance coated aluminum materials prepared in examples 1 through 5 and comparison examples 1 and 2 was evaluated as described below. First, a sample was cut from each of the electrically conductive substance coated aluminum materials prepared in examples 1 through 5 and comparison examples 1 and 2 so as to have a rectangular shape having a width of 20 mm and a length of 100 mm, thereby preparing each test sample. By using a sandpaper, an electrically conductive substance layer in a surface layer in one part of this sample was filed away. By means of a conductivity check mode of a tester (DIGITAL MULTIMETER PM5 produced by Sanwa Electric Instrument Co., Ltd.), the electrical conductivity was checked by pressing terminals against surfaces of an aluminum part and an electrically conductive substance layer of each of the test samples prepared as described above. The evaluation result is shown in "Electrical conductivity" in Table 1.

### [Over-time reliability test: hydrochloric acid exfoliation test]

First, a sample was cut from each of the electrically conductive substance coated aluminum materials prepared in examples 1 through 5 and comparison examples 1 and 2 so as to have a strip shape having a width of 10 mm and a length of 100 mm, thereby preparing each test sample. Each of these test samples was immersed in a hydrochloric acid solution having a temperature of 80°C and a concentration of 1M (M means a molar concentration [mol/liter]), and a period of time lasting until each of the organic substance layers 2 (carbon-containing layers in comparison examples 1 and 2) was completely exfoliated was measured. Each period of time measured as described above is shown in "Hydrochloric acid exfoliation time" in Table 1.

### [Over-time reliability test: hydration reaction test]

First, a sample was cut from each of the electrically conductive substance coated aluminum materials prepared in examples 1 through 5 and comparison examples 1 and 2 so as to have a size of a width of 65 mm and a length of 70 mm, thereby preparing each test sample. Each of these test samples was immersed in pure water, which was heated so as to have a temperature of 80°C, for 60 minutes; gas generated due to hydration reaction was collected; a volume of the gas was measured, and the measured volume was evaluated as a hydration reaction amount. Each amount is shown in "Hydration reaction amount" in Table 1.

**[Table 1]**

| | Resin used in resin layer formation step | Solvent | Electrical conductivity | Hydrochloric acid exfoliation time [sec] | Hydration reaction amount [ml] |
|---|---|---|---|---|---|
| Example 1 | Polyvinyl alcohol based resin | Water | Possessed | 300 | 1.2 |
| Example 2 | Polyvinyl butyral based resin | Toluene + Methyl ethyl ketone | Possessed | 360 | 0.9 |
| Example 3 | Epoxy based resin | Toluene + Methyl ethyl ketone | Possessed | 350 | 0.5 |
| Example 4 | Phenol based resin | Toluene + Methyl ethyl ketone | Possessed | 400 | 0.3 |
| Example 5 | Acryl based resin | Toluene + Methyl ethyl ketone | Possessed | 380 | 0.6 |
| Comparison example 1 | - | Butanol | Possessed | 60 | 8.3 |
| Comparison example 2 | Polyvinyl chloride based resin | Toluene + Methyl ethyl ketone | Possessed | 120 | 6.0 |

In the result shown in Table 1, it is shown that in each of the electrically conductive substance coated aluminum materials in examples 1 through 5, the hydration reaction is suppressed and characteristics excellent in the adhesiveness to the aluminum material of the organic substance layer are exhibited, as compared with each of electrically conductive substance coated aluminum materials in comparison examples 1 and 2.

This proves that each of the electrically conductive substance coated aluminum materials in examples 1 through 5 exhibits the below-described effects. Specifically, each of the electrically conductive substance coated aluminum materials in examples 1 through 5 include no carbon black particles as an electrically conductive substance and the organic substance layer 2 is formed on the surface of the aluminum foil 1 of each thereof. Because this organic substance layer 2 has the extremely dense structure, in a case where each of the electrically conductive substance coated aluminum materials in examples 1 through 5 is exposed to an atmosphere having a high temperature and a high humidity for a long period of time, intrusion of moisture contained in the atmosphere can be suppressed. In addition, because this organic substance layer 2 includes the carbon precursor, the presence of the carbon precursor allows the electrical conductivity to be ensured even without causing the surface of the aluminum foil 1 to carry the carbon particles. As a result, it is inferred that as compared with the conventional electrically conductive substance coated aluminum material, while the hydration reaction with the moisture in the atmosphere having the high humidity is suppressed, the electrical conductivity can be ensured, and it is made possible that the electrically conductive substance coated aluminum material according to the present invention can be used in a harsh atmosphere having a high temperature and a high humidity for a longer period of time than the conventional one.

The embodiment and examples described herein are to be considered in all respects only as illustrative and not restrictive. It is intended that the scope of the invention is, therefore, indicated by the appended claims rather than the foregoing description of the embodiment and examples and that all modifications and variations coming within the meaning and equivalency range of the appended claims are embraced within their scope.

### INDUSTRIAL APPLICABILITY

By using an electrically conductive substance coated aluminum material according to the present invention, an electrode and a current collector of a capacitor such as an electric double layer capacitor, an aluminum electrolytic capacitor, and a functional solid capacitor as well as a current collector and an electrode structure of an electrode or the like of a secondary battery such as a lithium ion battery are formed, thereby allowing capacitance characteristics, internal resistance characteristics, charge and discharge characteristics, and life of a capacitor or a battery to be enhanced.

### REFERENCE SIGNS LIST

1: aluminum foil, 2: organic substance layer, 3: interposing layer.

## Claims

1. A method for manufacturing an electrically conductive substance coated aluminum material, comprising:
an aluminum material (1);
an organic substance layer (2) without carbon particles formed on a surface of the aluminum material (1); and
an interposing layer (3) formed in at least one part of regions of the surface of the aluminum material (1) between the aluminum material (1) and the organic substance layer (2) and including a carbide of aluminum, the organic substance layer (2) including a carbon precursor;
wherein the method comprises:
a resin layer formation step of forming a resin layer on a surface of the aluminum material (1); and
an organic substance layer formation step of forming the organic substance layer (2) by placing the aluminum material (1) having the resin layer formed thereon in an enclosed space , wherein a hydrocarbon-containing substance is present, and heating the aluminum material (1) and the hydrocarbon-containing substance, whereby the surface of the aluminum material (1) is coated with the organic substance layer (2), whereby the interposing layer (3) is formed between the aluminum material (1) and the organic substance layer (2), and whereby the resin layer becomes the organic substance layer (2) with electrical conductivity.

2. The method according to claim 1 for manufacturing the electrically conductive substance coated aluminum material, wherein
the resin layer formation step includes a step of mixing a resin and a solvent.

3. The method according to claim 1 for manufacturing the electrically conductive substance coated aluminum material, wherein
the organic substance layer formation step is conducted at a temperature in a range of greater than or equal to 450°C and less than 660°C.

4. An electrically conductive substance coated aluminum material, obtainable by a method in accordance with any of claims 1 to 3, comprising:
an aluminum material (1);
an organic substance layer (2) without carbon particles formed on a surface of the aluminum material (1); and
an interposing layer (3) formed in at least one part of regions of the surface of the aluminum material (1) between the aluminum material (1) and the organic substance layer (2) and including a carbide of aluminum, the organic substance layer (2) including a carbon precursor.

## Patentansprüche

1. Verfahren zum Herstellen eines mit einer elektrisch leitenden Substanz beschichteten Aluminiummaterials, umfassend:
ein Aluminiummaterial (1);
eine organische Substanzschicht (2) ohne Kohlenstoffpartikel, gebildet auf einer Oberfläche des Aluminiummaterials (1); und
eine Zwischenschicht (3), gebildet in mindestens einem Teil von Bereichen der Oberfläche des Aluminiummaterials (1) zwischen dem Aluminiummaterial (1) und der organischen Substanzschicht (2) und beinhaltend ein Karbid aus Aluminium, wobei die organische Substanzschicht (2) einen Kohlenstoffprecursor beinhaltet;
wobei das Verfahren umfasst:
einen Harzschichtbildungsschritt zum Bilden einer Harzschicht auf einer Oberfläche des Aluminiummaterials (1); und
einen organischen Substanzschichtbildungsschritt zum Bilden der organischen Substanzschicht (2), indem das Aluminiummaterial (1), besitzend die Harzschicht darauf gebildet, in einem geschlossenen Raum platziert wird, worin eine kohlenwasserstoffhaltige Substanz vorhanden ist, und das Aluminiummaterial (1) und die kohlenwasserstoffhaltige Substanz erhitzt werden, wodurch die Oberfläche des Aluminiummaterials (1) mit der organischen Substanzschicht (2) beschichtet wird, wodurch die Zwischenschicht (3) zwischen dem Aluminiummaterial (1) und der organischen Substanzschicht (2) gebildet wird, und wodurch die Harzschicht zu der organischen Substanzschicht (2) mit elektrischer Leitfähigkeit wird.

2. Das Verfahren nach Anspruch 1 zum Herstellen des mit der elektrisch leitenden Substanz beschichteten Aluminiummaterials, wobei
der Harzschichtbildungsschritt einen Schritt des Mischens eines Harzes und eines Lösungsmittels beinhaltet.

3. Das Verfahren nach Anspruch 1 zum Herstellen des mit der elektrisch leitenden Substanz beschichteten Aluminiummaterials, wobei
der organische Substanzschichtbildungsschritt bei einer Temperatur in einem Bereich von größer oder gleich 450°C und kleiner als 660°C durchgeführt wird.

4. Mit einer elektrisch leitfähigen Substanz beschichtetes Aluminiummaterial, erhältlich durch ein Verfahren nach irgendeinem der Ansprüche 1 bis 3, umfassend:
ein Aluminiummaterial (1);
eine organische Substanzschicht (2) ohne Kohlenstoffpartikel, gebildet auf einer Oberfläche des Aluminiummaterials (1); und
eine Zwischenschicht (3), gebildet in mindestens einem Teil von Bereichen der Oberfläche des Aluminiummaterials (1) zwischen dem Aluminiummaterial (1) und der organischen Substanzschicht (2) und beinhaltend ein Karbid aus Aluminium, wobei die organische Substanzschicht (2) einen Kohlenstoffprecursor beinhaltet.

## Revendications

1. Procédé de fabrication d'un matériau d'aluminium revêtu d'une substance électroconductrice, comprenant :
un matériau d'aluminium (1) ;
une couche de substance organique (2) sans particules de carbone formée sur une surface du matériau d'aluminium (1) ; et
une couche d'interposition (3) formée dans au moins une partie des régions de la surface du matériau d'aluminium (1) entre le matériau d'aluminium (1) et la couche de substance organique (2) et incluant un carbure d'aluminium, la couche de substance organique (2) incluant un précurseur de carbone ;
lequel procédé comprend :
une étape de formation de couche de résine consistant à former une couche de résine sur une surface du matériau d'aluminium (1) ; et
une étape de formation de couche de substance organique consistant à former la couche de substance organique (2) par installation du matériau d'aluminium (1) comportant la couche de résine formée sur ce dernier, dans un espace fermé, dans lequel une substance hydrocarbonée est présente, et chauffage du matériau d'aluminium (1) et de la substance hydrocarbonée, moyennant quoi la surface du matériau d'aluminium (1) est revêtue de la couche de substance organique (2), moyennant quoi la couche d'interposition (3) est formée entre le matériau d'aluminium (1) et la couche de substance organique (2), et moyennant quoi la couche de résine devient la couche de substance organique (2) présentant une conductivité électrique.

2. Procédé selon la revendication 1 pour la fabrication du matériau d'aluminium revêtu d'une substance électroconductrice, dans lequel
l'étape de formation de couche de résine inclut une étape de mélange d'une résine et d'un solvant.

3. Procédé selon la revendication 1 pour la fabrication du matériau d'aluminium revêtu d'une substance électroconductrice, dans lequel
l'étape de formation de couche de substance organique est effectuée à une température dans une plage de températures supérieures ou égales à 450 °C et inférieures à 660 °C.

4. Matériau d'aluminium revêtu d'une substance électroconductrice, pouvant être obtenu par un procédé selon l'une des revendications 1 à 3, comprenant :
un matériau d'aluminium (1) ;
une couche de substance organique (2) sans particules de carbone formée sur une surface du matériau d'aluminium (1) ; et
une couche d'interposition (3) formée dans au moins une partie des régions de la surface du matériau d'aluminium (1) entre le matériau d'aluminium (1) et la couche de substance organique (2) et incluant un carbure d'aluminium, la couche de substance organique (2) incluant un précurseur de carbone.
